# EUROPEAN PATENT APPLICATION

(11) **EP 4 793 034 A1**
(43) Date of publication of application: **19.08.2026**
(21) Application number: 25157310.1
(22) Date of filing: 12.02.2025
(51) Int. Cl.: B32B 5/02, B32B 5/14, B32B 5/16, B32B 5/26, B32B 7/04, H01M 50/124

(54) **COMPOSITE MATERIAL AND METHOD FOR PRODUCING A COMPOSITE MATERIAL**

(71) Applicant: h.k.o. Isolier- und Textiltechnik GmbH, 46049 Oberhausen (DE)
(72) Inventor: STUDE, Ulrich, 92400 Courbevoie (FR); GÖRTZ, Thorsten, 92400 Courbevoie (FR)
(74) Representative: Von Rohr Patentanwälte Partnerschaft mbB

(57) **Abstract**

The present invention relates to a composite material (1), in particular for thermal insulation of a rechargeable battery and/or for preventing damage in case of a thermal runaway of a rechargeable battery, preferably a traction battery of an electric vehicle. The composite material (1) has two textile layers (2,3), wherein one of the layers a nonwoven fabric (2), in particular a veil, and one of the textile layers is a woven fabric (3), and wherein the nonwoven fabric layer (2) is completely penetrated with a ceramic penetration medium (4), whereby the woven fabric layer (3) is partly penetrated with the ceramic penetration medium (4).

According to a further aspect, the present invention relates to a method for producing the composite material.

## Description

The present invention relates to a composite material according to the preamble of claim 1 and to a method for producing a composite material according to the preamble of claim 15.

According to further aspects, which may also be realized independently, the present invention also relates to a protection element made from the composite material, to a rechargeable battery comprising a protection element made from the composite material and to a use of the composite material.

The present invention in particular relates to the technical problem of preventing damage in the case of thermal runaway of a rechargeable battery.

In the present invention, the term "composite material" is preferably to be understood as a flat and/or sheet-like material with a layered structure, in particular a layer package, which is in particular designed and/or used for the thermal and/or electrical insulation and/or any other shielding of a battery and/or its cells and/or modules.

Likewise, the term "protection element" is preferably to be understood as a flat and/or sheet-like component with a layered structure, in particular a layer package, which is in particular designed and/or used for the thermal and/or electrical insulation and/or any other shielding of a battery and/or its cells and/or modules. The protection element is preferably made of or consists of the composite material. The protection element is preferably obtained or obtainable from the (preferably continuous) composite material by cutting, die-cutting, and/or punching the composite material.

In particular, the composite material and/or protection element is/are configured to reduce and/or delay the release of heat to the environment, in particular a vehicle interior, and/or to contain and/or reduce and/or delay the spread of heat in a battery in the event of uncontrolled and/or excessive heat development in the battery, in particular in the case of thermal runaway.

In the present invention, the term "battery" is to be understood as meaning, in particular, a device for providing electrical energy by converting chemical energy. The battery is preferably composed of several interconnected accumulator cells and/or cell blocks, i.e. battery cells and/or battery modules. The battery is preferably a rechargeable battery or accumulator or secondary cell.

In particular, the battery is configured as a traction battery and/or for the drive of electric vehicles, such as a sodium-ion battery, lithium-ion battery, lithium iron phosphate battery (also denoted as LiFePO₄ battery or LFP battery), lithium metal battery, solid-state battery or any other battery suitable as a traction battery of an electric vehicle. Here, reliable and/or effective protection/shielding and/or thermal insulation is important in order to protect the vehicle occupants in the event of the battery overheating and/or in the event of a thermal runaway, for example as a result of a traffic accident, at least until the arrival of rescue services.

Due to their chemical composition, some batteries, for example lithium metal and lithium-ion batteries, exhibit comparatively high instability. If a local short-circuit of the internal electrodes in a battery cell occurs, for example due to contamination of the separator separating the electrodes by trapped foreign particles and/or mechanical action or damage, the strong short-circuit current heats the battery cell up to 800 °C in a short time, sometimes up to 1300 °C. This process is known as thermal runaway. The thermal runaway of one battery cell can easily and/or quickly spread to other, adjacent battery cells, especially since the separator loses stability at relatively low temperatures, for example above 120 °C, and short circuits can therefore quickly occur in adjacent battery cells. This leads to an unstoppable chain reaction, wherein the energy stored in the battery is released in a short time, usually explosively and/or with the release of toxic gases and with the formation of flames and/or sparks. There is also the risk of the battery bursting when the internal pressure rises accordingly.

The battery cells of a traction battery of an electric vehicle, such as a lithium-ion battery, usually comprise vents. A vent is a device through which hot gases and/or particles can escape when a thermal runaway of the battery cell occurs. The vent is typically designed in such a way that it (automatically) opens or breaks when a thermal runaway occurs. The vents allow a defined dissipation of the hot gases and/or particles in the case of a thermal runaway. The opening of the vent and/or the escape of hot gases and/or particles through the vent, in particular in the case of thermal runaway, is also denoted as venting. In the case of venting, a beam or jet of hot gases and/or particles comprising high kinetic energy escapes through the opened vent.

Likewise, there is a high demand for efficient and/or long-lasting heat protection of adjacent areas and/or rooms, especially vehicle interiors or passenger cabins, against uncontrolled heat development in the battery, such as in the case of a thermal runaway and/or venting. In particular, occupants and/or objects should be protected from heat until rescue and/or recovery measures have been fully completed.

The use of so-called fire protection elements which, for example, cover the battery elements thereof, such as battery cells or battery modules, and thus offer sufficient protection even in the event of thermal runaway is known. In particular, it is known to integrate such fire protection elements in battery lids.

Furthermore, it is known that ceramic materials are well suited to withstand a high thermal load, for example, in the described case of thermal runaway of a rechargeable battery or elements thereof, and thus to prevent possible damage. In the field of use of corresponding ceramic materials, it is of interest to resort to textile structures, since these enable a multiplicity of manufacturing processes and a multiplicity of integration possibilities in diverse further industrial applications, for example, with regard to integration in fire protection elements.

Here, it is desirable, in particular against the background of a field of use in electro-mobility, for production capacities of corresponding textiles suitable for the thermal loads outlined to be increased and also for the production costs to be reduced in order to be able to meet the increasing demand for electrification of the industry or of the mobility.

Moreover, automobile manufacturers require protection elements to be integrated in traction batteries of electric vehicles for preventing damage in the case of thermal runaway to be as thin and space-saving as possible.

DE 20 2022 002 952 U1 discloses a fiber-reinforced ceramic composite material having a nonwoven fabric made from inorganic glass fibers embedded in an oxide ceramic matrix and a layer of a woven fabric made from inorganic fibers. The nonwoven fabric and the woven fabric are both penetrated with the same ceramic, water-based slurry.

DE 20 2023 100 724 U1 discloses a layer system having a first layer of a nonwoven-based fiber composite with an oxidic matrix and a second layer of thermally isolating material. The first layer comprises short fibers and a mullitic matrix and the thermally isolating material is a needled nonwoven. The first layer and the second layer are joined by the mullitic matrix. The penetration depth of the mullitic matrix into the second layer may be 10 % to 90 % of the thickness of the second layer.

It is an object of the present invention to provide protection in case of a thermal runaway of a battery, in particular to provide a material and/or protection element for protection against thermal runaway of a battery, in particular a traction battery of an electric vehicle, preferably wherein the material or protection element is as thin as possible and/or wherein a thermal runaway and/or venting does not result in the formation of a hole in the material or protection element and/or wherein the temperature on a side of the material or protection element facing away from the battery or it cells and/or modules is kept as low as possible, in particular below 200 °C, below 150° C or even below 120 °C, preferably at least for five minutes or ten minutes.

The above object is solved by a composite material according to claim 1 or by a method according to claim 15. Advantageous embodiments are subject of the subclaims.

The composite material according to the invention is configured for thermal insulation of a rechargeable battery and/or for preventing damage in case of a thermal runaway of a rechargeable battery, preferably a traction battery of an electric vehicle.

The composite material has a first textile layer, a second textile layer and a ceramic penetration medium. One of the textile layers is a nonwoven fabric, in particular a veil, and one of the textile layers is a woven fabric.

The first textile layer is made from glass fibers and the second textile layer is made from glass fibers. The layers may be made from the same fibers or fiber types or from different fibers or fiber types.

According to the invention, the first textile layer is completely penetrated with the ceramic penetration medium and the second textile layer is partly penetrated with the ceramic penetration medium.

"Partly penetrated" in this context means in particular that the second textile layer has a region which is not penetrated with the ceramic penetration medium or is free of the ceramic penetration medium.

The specific combination of a nonwoven fabric made from glass fibers, a woven fabric made from glass fibers, and a ceramic penetration medium, wherein one of the fabrics is completely penetrated with the ceramic penetration medium and one of the fabrics is only partly penetrated with the ceramic penetration medium has turned out to be particularly effective in withstanding the forces and temperatures that occur during thermal runaway, while at the same time being comparably cost-efficient, in particular due to the fiber types used. Tests performed by the inventors showed that by this specific combination, the formation of a hole in the composite material in case of thermal runaway and/or venting of a battery can be avoided and that the temperature on the side of the composite material facing away from the side at which the thermal runaway takes place can be kept below 120 °C.

Surprisingly, it has been shown that a partial penetration of the composite material or one of its textile layers significantly improves thermal runaway resistance as compared to a complete penetration of the composite material or its textile layers. This is attributed to higher thermal insulation capabilities of the unpenetrated textile layer or region thereof as compared to the penetrated textile layer or region thereof.

Preferably, the first textile layer is the nonwoven fabric, in particular the veil, and the second textile layer is the woven fabric. Thus, in other words, it is preferred that the nonwoven fabric or veil is completely penetrated with the ceramic penetration medium and that the woven fabric is partly penetrated with the ceramic penetration medium. A composite material with this feature has turned out to be particularly effective in preventing damages in case of thermal runaway of a battery.

The penetration depth of the ceramic penetration medium in the second textile layer is preferably between 0.3 mm and 1.0 mm, more preferably between 0.5 mm and 0.7 mm. As an alternative or in addition, the penetration depth of the ceramic penetration medium in the second textile layer is preferably between 35 % and 92 %, more preferably between 70 % and 85 %, of the thickness of the second textile layer.

The penetration depth of the ceramic penetration medium in the composite material is preferably between 60 % and 95 %, more preferably between 80 % and 90 %, of the thickness of the composite material. As an alternative or in addition, the penetration depth of the ceramic penetration medium in the composite material is preferably between 0.7 mm and 1.2 mm, more preferably between 1.0 mm and 1.1 mm.

The "penetration depth" is preferably of the depth or distance perpendicular to the main extension plane of the textile layer or composite material, to which the ceramic penetration medium has penetrated into the textile layer or composite material. The penetration depth of the textile layer is in particular measured from the surface of the partly penetrated textile layer facing or adjoining the fully penetrated textile layer. The penetration depth of the composite material is in particular measured from its surface.

Surprisingly, it has been shown that a certain minimum amount of penetration of the ceramic penetration medium into the second textile layer is highly beneficial for the thermal runaway resistance of the composite material. This is attributed to improved bonding of the textile layers due to the penetration of ceramic penetration medium into the second textile layer.

Thus, the above-mentioned absolute and relative penetration depth values are a surprisingly optimal compromise that achieves, on the one hand, good bonding between the textile layers, and, on the other hand, good thermal insulation properties provided by the unpenetrated part of the partly penetrated textile layer, resulting in an overall improved thermal runaway resistance of the composite material.

The first textile layer preferably has a thickness between 0.3 mm and 0.6 mm, more preferably between 0.4 mm and 0.5 mm, in particular about 0.45 mm.

The second textile layer preferably has a thickness between 0.2 mm and 2.0 mm, more preferably between 0.4 mm and 1.5 mm, in particular between 0.6 mm and 1.0 mm, particularly preferably about 0.8 mm.

The composite material preferably has a thickness of 2 mm or less, more preferably 1.8 mm or less, in particular 1.5 mm or less, particularly preferably 1.3 mm or less.

The provided thicknesses of the first textile layer, second textile layer and/or the composite material is/are conducive to the realization of a composite material with low thickness and has proven to be sufficient to achieve the desired material properties of the composite material.

The first textile layer and/or the second textile layer is/are preferably made of glass fibers selected from E-glass fibers, ECR-glass fibers, S-glass fibers and/or silica fibers. These materials or fibers are comparably inexpensive, in particular compared to ceramic fibers, and enable economic use of the composite material. Further, it has surprisingly been shown that a composite material with these comparably inexpensive materials/fibers nevertheless has sufficient material properties, in particular thermal runaway resistance.

The ceramic penetration medium preferably comprises particles of mixed metal oxide, the mixed metal oxide consisting of aluminum oxide (Al₂O₃) and silicon dioxide (SiO₂), preferably mullite, in particular synthetic mullite. This is conducive to good thermal runaway resistance and/or good bonding of the textile layers by the ceramic penetration medium.

According to a preferred embodiment, the ceramic penetration medium is a suspension and/or comprises one or more, preferably all, of the following components: Al₂O₃, preferably α-Al₂O₃ and/or in powder form, metakaolin, preferably in powder form, silicic acid, deflocculant, and/or water. Since in particular the components α-Al₂O₃ and metakaolin are available very cheaply in large quantities, the costs of the ceramic penetration medium can be significantly reduced or kept very low, with the composite material still achieving the desired properties.

Preferably, the ceramic penetration medium comprises particles of sinterable material and/or oxide ceramic material. This is conducive to good fire protection properties and/or high thermal runaway resistance of the composite material.

The ceramic penetration medium is preferably a dispersion with particles dispersed in a dispersion medium. This allows penetration of the ceramic penetration medium into the textile layers up to the desired penetration depth in short time.

It is preferred that the ceramic penetration medium is water-based or comprises water, in particular deionized water, and/or comprises a deflocculant. In particular, the dispersion medium comprises or consists of the water and/or the deflocculant. The water and/or deflocculant allow to adjust the viscosity of the ceramic penetration medium so that the desired penetration or penetration depth of the composite material and/or the first and second layers are easily achieved.

The composite material is preferably a green body and/or unsintered. In particular, thus, although the composite material comprises a ceramic medium which is preferably sinterable, the composite material is left unsintered or no sintering step takes place in the manufacture of the composite material.

Surprisingly, even without sintering, the composite material has sufficient or high mechanical stability and/or elasticity so that the composite material can be further transported, handled, used and/or processed without problems or special care.

Omitting the sintering step or leaving the composite material unsintered speeds up its production, reduces the production costs and reduces the carbon footprint. In addition, omitting the sintering step or leaving the composite material unsintered surprisingly makes a significant contribution to the excellent fire protection properties or thermal runaway resistance of the proposed composite material.

This is attributed to the fact that in case of thermal runaway (or any other heating of the composite material), a subsequent sintering step takes place. Thus, when the composite material is exposed to heat, the ceramic penetration medium undergoes the same chemical reactions as in an intentional sintering process, i.e. a highly endothermic chemical reaction takes place. A large proportion of the heat is absorbed in the endothermic chemical reaction, resulting in low temperatures on the side of the composite material opposite the heat. In addition, this "accidental sintering" process cures the ceramic penetration medium and results in improved mechanical stability which enables the composite material to withstand the thermal runaway for a long time and avoids the formation of a hole in the composite material during thermal runaway.

It is preferred that the first and second textile layers are bonded to each other by the ceramic penetration medium and/or that the composite material does not comprise a bonding medium for bonding the first and second textile layers to each other in addition to the ceramic penetration medium. In other words, the ceramic penetration medium preferably provides sufficient bonding or adhesive properties so that an additional bonding medium can be dispensed with. This simplifies the production process of the composite material and avoids additional fire loading due to an additional bonding medium.

According to another aspect, which may also be realized independently, the present invention relates to a method for producing a composite material having a first textile layer, a second textile layer and a ceramic penetration medium.

The method comprises providing a first textile layer made from glass fibers and a second textile layer made from glass fibers, wherein one of the textile layers is a nonwoven fabric, in particular a veil, and one of the textile layers is a woven fabric; providing a ceramic penetration medium; and forming the composite material from the first textile layer, the second textile layer and the ceramic penetration medium.

According to one aspect, the method comprises completely penetrating the first textile layer with the ceramic penetration medium and partly penetrating the second textile layer with the ceramic penetration medium.

According to a further aspect of the method, which may also be realized independently, a composite material as disclosed herein is formed or produced.

The advantages explained with regard to the composite material according to the invention are achieved accordingly by the method according to the invention.

The above-mentioned aspects and features of the present invention as well as the aspects and features of the present invention resulting from the claims and the following description can be realized independently of each other, but also in any combination and/or sequence.

Additional advantages, features, properties and aspects of the present invention result from the claims and the following description of preferred embodiments based on the drawing, wherein:
- Fig. 1: shows a schematic sectional view of a proposed composite material;
- Fig. 2: shows a schematic representation of an electric vehicle with a battery comprising the composite material or a protection element made from the composite material;
- Fig. 3: shows exemplary measurement data received from a test performed with the proposed composite material;
- Fig. 4: shows exemplary measurement data received from basically the same test as in Fig. 3 performed with a first comparative material;
- Fig. 5: shows exemplary measurement data received from basically the same test as in Fig. 3 performed with a second comparative material; and
- Fig. 6: shows a schematic representation of an installation for producing the proposed composite material.

In the Figures, the same reference signs are used for identical or similar components and devices, wherein the same or corresponding advantages and properties may result, even if a repeated description is omitted.

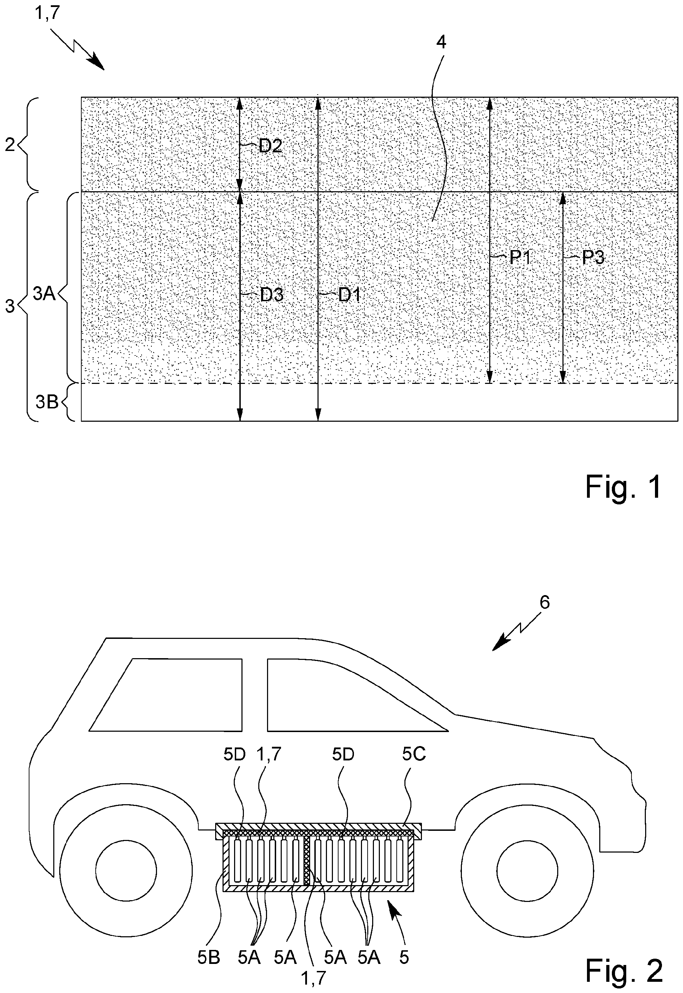

Fig. 1 shows a sectional view of the proposed composite material 1.

The composite material 1 comprises or consists of at least one first textile layer 2, at least one second textile layer 3 and a ceramic penetration medium 4. The ceramic penetration medium 4 is indicated by dots in Fig. 1.

The composite material 1 preferably designed or adapted for thermal insulation of a rechargeable battery 5 and/or for preventing damage in case of a thermal runaway of a rechargeable battery 5. "Damage" in this sense may refer to both material damage or property damage, such as damage of the battery 5 or a vehicle 6 comprising the battery 5, and damage to persons, i.e. bodily injury.

The rechargeable battery 5 is preferably a traction battery of an electric vehicle 6. The battery may for example be a solid-state battery and/or a sodium-based or lithium-based battery, in particular a sodium-ion battery, lithium-ion battery, lithium iron phosphate battery (also denoted as LiFePO₄ battery or LFP battery), or lithium metal battery, a sodium-based or lithium-based solid state battery, or any other battery, in particular a battery suitable as a traction battery of an electric vehicle.

The battery 5 preferably comprises the composite material 1.

In the battery 5, the composite material 1 is preferably present in the form of one or more protection elements 7 made from the proposed composite material 1.

A protection element 7 in the sense of the present invention is in particular a piece made from or consisting of the composite material 1. The protection element 7 may be obtained or obtainable from the composite material 1 by cutting, die-cutting, and/or punching the composite material 1. Thus, the previous and following explanations with respect to the composite material 1 apply to the protection element 1 accordingly. Fig. 1 may also be understood to show a sectional view of a protection element 7 according to the invention.

The protection element 7 constitutes an independent aspect of the present invention.

Fig. 2 schematically shows an electric vehicle 6 with a rechargeable battery 5, wherein the rechargeable battery 5 is a traction battery of the electric vehicle 6 and has the composite material 1 or a protection element 7 formed from the composite material 1.

An electric vehicle in the sense of the present invention preferably is a vehicle, in particular automobile or car, that uses one or more electric motors for propulsion, in particular using only energy stored in one or more batteries. The electric vehicle may be a full electric vehicle or a hybrid electric vehicle (i.e., a vehicle that combines a conventional internal combustion engine system with an electric propulsion system).

A traction battery of an electric vehicle in the sense of the present invention is in particular a rechargeable battery used to power the electric motor or motors of an electric vehicle.

The battery 5 preferably has several battery cells 5A arranged in a housing 5B. The battery 5 and/or housing 5B preferably comprises a lid or cover 5C. In the electric vehicle 6, the cover 5C is preferably arranged on an upper side of the battery 5 or the side of the battery 5 facing an interior or passenger cabin of the vehicle 6 and/or between the cells 5A and the interior or passenger cabin of the vehicle 6.

The battery cells 5A preferably have vents 5D. In particular, each battery cell 5A has its own vent 5D or a separate vent 5D. The vents 5D are configured to open and/or allow the escape of hot gases and/or particles in case of a thermal runaway of the respective battery cell 5A. This process is also denoted as "venting".

The composite material 1 or protection element 7 is preferably arranged inside the housing 5B. Preferably, the composite material 1 or protection element 7 is arranged above the cells 5A or on a side of the cells 5A facing the passenger cabin of the vehicle 6. In particular, the composite material 1 or protection element 7 is arranged between the cells 5A and the cover 5C. As an alternative or in addition, the battery 5 may comprise the composite material 1 or one or more protection elements 7 arranged between one or more cells 5A and/or modules of the battery 5.

The composite material 1 or protection element 7 preferably covers one or more of the battery cells 5A or adjacent battery cells 5A. In particular, the composite material 1 or protection element 7 is arranged over or covers one or more of the vents 5D, in particular in order to absorb the kinetics of the emerging beam or jet during thermal runaway.

Fig. 2 shows an example in which the battery 5 comprises composite material 1 or a protection element 7 arranged between the cells 5A and the cover 5C and composite material 1 or a protection element 7 arranged between different cells 5A.

Now, turning back in particular to Fig. 1, the composite material 1 is explained in more detail.

The first textile layer 2 is different from the second textile layer 3. In the proposed composite material 1, one of the textile layers 2, 3 is a nonwoven fabric, in particular a veil, and one of the textile layers 2, 3 is a woven fabric. The layers 2, 3 may be made from different starting materials, for example different fibers or fiber types.

Preferably, the composite material 1 comprises or consists of exactly one first textile layer 2 as described herein and exactly one second textile layer 3 as described herein.

However, the composite material 1 may also comprise exactly one first textile layer 2 as described herein and two or more, preferably identical, second textile layers 3 as described herein or exactly one second textile layer 3 as described herein and two or more, preferably identical, first textile layers 2 as described herein. As an alternative or in addition, the composite material 1 may comprise two or more first textile layers 2 and second textile layers 3 as described herein and/or further textile layers and/or other layers.

The first textile layer 2 is made from glass fibers. Moreover, the second textile layer 3 is made from glass fibers. The first and second textile layers 2, 3 may be made from the same fibers or fiber types, but they also be made from different fibers or fiber types. For example, one of the layers 2, 3 may be made from E-glass fibers and one of the layers 2, 3 may be made from another type of glass fibers.

The glass fibers are preferably E-glass fibers, ECR-glass fibers, S-glass fibers, silica fibers or a mixture thereof, in particular wherein the mixture may contain only two or only three of the named fiber types. The layers 2, 3 may have different types of glass fibers and/or different mixtures of fiber types.

A silica fiber in the sense of the present invention is in particular a fiber that has a silicon dioxide (SiO₂) content of at least 92 %, preferably at least 94 %. A silica fiber in the sense of the present invention is in particular a continuous fiber or staple fiber that is leached in an acid environment as a second production step after the filament production. In particular, silica fibers are a certain type of glass fibers.

The ceramic penetration medium 4 is preferably a fluid, a liquid and/or a slurry, at least before being applied to the first and/or second textile layers 2, 3. The ceramic penetration medium 4 is preferably a dispersion with (solid) particles, in particular ceramic particles, dispersed in a preferably fluidic, in particular liquid, dispersion medium. Particularly preferably, the dispersion is a suspension.

According to the invention, the first textile layer 2 is completely penetrated with the ceramic penetration medium 4 and the second textile layer 3 is partly penetrated with the ceramic penetration medium 4.

Thus, the second textile layer 3 comprises a section or first region 3A which comprises or is penetrated by the ceramic penetration medium 4 and a second region 3B which is not penetrated by the ceramic penetration medium 4 or which is free of the ceramic penetration medium 4.

In other words, the first textile layer 2 and the second textile layer 3 preferably comprise the ceramic penetration medium 4. In particular, the first textile layer 2 and the second textile layer 3 or the fibers thereof are at least partly embedded in the carrier penetration medium 4.

After being applied to the first textile layer 2 and/or the second textile layer 3, the liquid ceramic penetration medium 4 preferably dries and cures or solidifies, at least to a certain extent. Thus, in the finished composite material 1, the ceramic penetration medium 4 is preferably not present as a liquid or slurry.

The ceramic penetration medium 4 preferably forms a matrix of the composite material 1 in which the layers 2, 3 or the fibers thereof are at least partly embedded.

Particularly preferably, the first textile layer 2 is the nonwoven fabric, in particular the veil, and the second textile layer 3 is the woven fabric. Therefore, in other words, it is particularly preferred that the nonwoven fabric is completely penetrated with the ceramic penetration medium 4 and the woven fabric is partly penetrated with the ceramic penetration medium 4.

The composite material 1 may comprise or consist of two completely penetrated first textile layers 2 made from nonwoven fabric and (exactly) one partly penetrated second textile layer 3 made from woven fabric.

The composite material 1, first textile layer 2, and second textile layer 3 have thicknesses D1, D2 and D3, respectively. The thicknesses D1, D2 and D3 denote the extension of the composite material 1, first textile layer 2, and second textile layer 3, respectively, perpendicular to their respective main plane of extension, as particular indicated in figure 1.

The ceramic penetration medium 4 is preferably penetrated into or through the composite material 1 and the first and second textile layers 2, 3 along the thickness D1, D2, D3 of the composite material 1 and its layers 2, 3. Therefore, the regions 3A and 3B preferably follow each other along the thickness D3 of the second textile layer 3 or in a direction perpendicular to the main plane of extension of the second textile layer 3. The first region 3A is preferably completely penetrated with the ceramic penetration medium 4.

Preferably, the composite material 1 and/or second textile layer 3 is penetrated with the ceramic penetration medium 4 over its complete surface or extension parallel to the main extension plane, but only partly or not completely penetrated with the ceramic penetration medium 4 along its thickness D1, D3 or its extension perpendicular to the main extension plane.

The thickness D2 of the nonwoven fabric or first textile layer 2 is preferably between 0.3 mm and 0.6 mm, more preferably between 0.4 mm and 0.5 mm, in particular about 0.45 mm. The thickness D1 of the nonwoven fabric or first textile layer 2 is preferably determined according to DIN EN ISO 9073-2:1996.

However, the nonwoven fabric or first textile layer 2 may also have a greater thickness D2, for example between 0.6 mm and 2.0 mm, in particular between 1.0 mm and 1.5 mm.

Generally, in the present disclosure, the expression "X is between A and B" means X may take the value A, the value B, or any value in the interval between A and B. Thus, the end values A and B are explicitly disclosed and included in the expression "between A and B".

The second textile layer 3 is preferably thicker than the first textile layer 2. The thickness ratio D3/D2 is preferably between 1.2 and 5.0, more preferably between 1.4 and 3.0, in particular between 1.6 and 2.0.

The thickness D3 of the woven fabric or second textile layer 3 is preferably between 0.2 mm and 2.0 mm, more preferably between 0.4 mm and 1.5 mm, in particular between 0.6 mm and 1.0 mm, particularly preferably about 0.8 mm. The thickness D3 of the woven fabric or second textile layer 3 is preferably determined according to DIN EN ISO 5084:1996-10 and/or DIN EN ISO 2286-3:2017-01.

The penetration depth P3 of the ceramic penetration medium 4 in the second textile layer 3 is preferably between 0.3 mm and 1.0 mm, more preferably between 0.5 mm and 0.7 mm. The penetration depth P3 is in particular the thickness of the first region 3A of the second textile layer 3.

As an alternative or in addition, the penetration depth P3 of the ceramic penetration medium 4 in the second textile layer 3 is preferably between 35 % and 92 %, more preferably between 70 % and 85 %, of the thickness D3 of the second textile layer 3. These relative values of the penetration depth P3 in particular apply when the thickness D3 of the second textile layer 3 is 1 mm or less but are in principle also valid when the thickness D3 of the second textile layer 3 is more than 1 mm or even more than 2 mm.

The thickness D1 of the composite material 1 is preferably 2.0 mm or less, more preferably 1.8 mm or less, in particular 1.5 mm or less, particularly preferably 1.3 mm or less. The thickness D1 of the composite material 1 is preferably determined according to DIN EN ISO 5084:1996-10 and/or DIN EN ISO 2286-3:2017-01.

The thickness D1 of the composite material 1 is preferably greater than the sum of the thickness D2 of the first textile layer 2 and the thickness D3 of the second textile layer 3 (D1>D2+D3). This is due in particular to swelling of the ceramic penetration medium 4 after it has been applied to the textile layers 2, 3 and/or after the ceramic penetration medium 4 has penetrated the textile layers 2, 3.

The penetration depth P1 of the ceramic penetration medium 4 in the composite material 1 is between 0.7 mm and 1.2 mm, more preferably between 1.0 mm and 1.1 mm.

As an alternative or in addition, the penetration depth P1 of the ceramic penetration medium 4 in the composite material 1 is preferably between 60 % and 95 %, more preferably between 80 % and 90 %, of the thickness D1 of the composite material 1. These relative values of the penetration depth P1 in particular apply when the thickness D3 of the second textile layer 3 is 1 mm or less and/or the thickness D1 of the composite material 1 is 1.5 mm or less. However, they are in principle also valid when the thickness D3 of the second textile layer 3 is more than 1 mm or even more than 2 mm and/or when the thickness D1 of the composite material 1 is more than 1.5 mm.

The woven fabric preferably has a plain weave, in particular according to DIN 61101-1:1979-01.

The woven fabric preferably has a specific weight or mass per unit area between 300 g/m² and 1000 g/m², more preferably between 500 g/m² and 800 g/m², in particular about 650 g/m². The specific weight or mass per unit area is preferably determined according to DIN EN 12127:1997-12.

The woven fabric preferably has a number of threads of warp of 7/cm and/or a number of threads of weft of 6/cm. The number of threads is preferably determined according to DIN EN 1049-2:1993.

The woven fabric preferably has a yarn count of warp and/or weft of 500 tex. The yarn count is preferably determined according to DIN EN ISO 2060:1995-04.

The woven fabric preferably has a filament diameter of warp and/or weft of 9 µm. The filament diameter is preferably determined according to DIN EN ISO 137:2016-09.

The woven fabric preferably has a tensile strength of warp of more than 2500 N/5cm, more preferably more than 3000 N/5cm, in particular more than 3500 N/5cm. The woven fabric preferably has a tensile strength of weft of more than 1300 N/5cm, more preferably more than 18000 N/5cm, in particular more than 2300 N/5cm. The tensile strength is preferably determined according to ISO 4606:1995-05.

Preferably, the woven fabric is used in loomstate condition and/or does not comprise a finish or coating.

A woven fabric with the above characteristics is commercially available from the manufacturer Saint-Gobain/HKO under the name TG650/9LHD.

The nonwoven fabric preferably has an input fiber diameter between 10 µm and 15 µm, in particular about 13 µm.

The nonwoven fabric preferably has a specific weight or mass per unit area between 20 g/m² and 80 g/m², more preferably between 40 g/m² and 60 g/m², in particular about 50 g/m². The specific weight or mass per unit area is preferably determined according to DIN EN 29073-1:1992-08.

The nonwoven fabric preferably has an LOI (Loss on Ignition) between 15 % and 20 %, in particular about 18 %. The LOI is preferably determined according to DIN EN 13820:2003-12.

The nonwoven fabric preferably has an MD (machine direction) tensile strength between 150 N/5cm and 300 N/5cm, more preferably between 180 N/5cm and 270 N/5cm, in particular about 230 N/5cm. The nonwoven fabric preferably has a CMD (cross machine direction) tensile strength between 100 N/5cm and 200 N/5cm, more preferably between 125 N/5cm and 175 N/5cm, in particular about 150 N/5cm. The MD and/or CMD tensile strength is/are preferably determined according to DIN EN 29073-3:1992-08.

The nonwoven fabric preferably has an air permeability of about 7000 l/(m² · sec). The air permeability is preferably determined according to DIN EN ISO 9237:1995-12.

The nonwoven fabric preferably has an anisotropy between 1.0 and 1.8, in particular about 1.4.

A nonwoven fabric or veil with the above characteristics is commercially available from the manufacturer Saint-Gobain Adfors CZ under the name U50R.

The ceramic penetration medium 4 preferably comprises particles, in particular solid particles, the particles preferably being dispersed in a dispersion medium.

The particles are preferably made of a composition consisting of mixed metal oxide, the mixed metal oxide consisting of aluminum oxide (Al₂O₃) and silicon dioxide (SiO₂), for example 70 to 95 wt.% aluminum oxide (Al₂O₃) and 5 to 30 wt.% silicon dioxide (SiO₂), in particular mullite, preferably synthetic mullite.

The particles are preferably particles of sinterable material and/or oxide ceramic material, in particular oxide ceramic material.

The ceramic penetration medium 4 is preferably water-based or comprises water, in particular deionized water. Further, the ceramic penetration medium 4 may comprise a deflocculant, in particular in addition to the water. Preferably, the dispersion medium comprises a consists of the water and/or the deflocculant.

Preferably, the ceramic penetration medium 4 comprises sinterable powder material consisting of a composition comprising 70 to 95 wt.% aluminum oxide (Al₂O₃) and 5 to 30 wt.% silicon dioxide (SiO₂), preferably wherein the powder material has a particle size distribution D₁₀₀ ≤ 10 µm. The sinterable powder material preferably forms the particles of the ceramic penetration medium 4.

The sinterable powder material preferably includes, in addition to the mullite phase, a small amount of free a-Al₂O₃ and amorphous silicon dioxide. This is conducive to achieving a high reactivity.

In the context of the present invention, a synthetic mullite or synthetic reactive mullite has proven to be particularly preferred, consisting of a composition comprising 72 wt.% of Al₂O₃ and 26 wt.% of SiO₂. In contrast to sinterable powders known from the prior art, this powder preferably has no crystal water, so that no calcination of the powder is required. A corresponding powder material is commercially available from the manufacturer Nabaltec under the trademark Symulox^{®} M672.

Other preferred compositions of the sinterable powder material include:
90 wt.% Al₂O₃ and 10 wt.% SiO₂,
80 wt.% Al₂O₃ and 20 wt.% SiO₂,
72 wt.% Al₂O₃ and 28 wt.% SiO₂, and
70 wt.% Al₂O₃ and 30 wt.% SiO₂.

These compositions are available from the company Sasol under the designations Siral 10, Siral 20, Siral 28M and Siral 30.

To achieve a particle size distribution of at least D₁₀₀ ≤ 10 µm, more preferably D₁₀₀ ≤ 5 µm, the slurry is preferably mixed and ground using an agitator bead mill. Grinding is preferably carried out over a period of 6 to 10 h, more preferably 7 to 9 h and most preferably 8 h, with ZrO₂ beads as the grinding medium. The long grinding time not only produces a narrow monomodal particle size distribution but also a sinterable matrix with a particularly high sintering activity.

Preferably, a powder material with a monomodal particle size distribution of D₁₀₀ ≤ 10 µm and D₅₀ ≤ 10 µm, more preferably monomodal particle size distribution of D₁₀₀ ≤ 5 pm and D₅₀ ≤ 1.5 µm, is used. The size of the ZrO₂ balls used for grinding is preferably in the range of 0.5 mm to 3 mm, preferably 1 mm. On the one hand, the appropriate size of the balls can be used to achieve the appropriate grinding effect. On the other hand, the balls can still be easily separated from the slurry after the grinding process.

The quantity of ZrO₂ balls for grinding is preferably about 2 to 4 times the quantity of powder material that can be sintered.

A slurry is preferably prepared which comprises 50 to 85 wt.%, preferably 70 to 85 wt.%, of sinterable powder material, 1 to 5 wt.%, preferably 1 to 3 wt.%, of deflocculant, preferably based on a carboxylic acid, and the remainder deionized water. A suitable ratio of powder material and deflocculant ensures that the textile layers 2, 3 are uniformly penetrated. If a roving is used as the material, the slurry can penetrate between the individual filaments, coat the individual filaments and thus at least partially space them apart from one another, so that a uniform sinterable matrix surrounds the individual filaments.

The ceramic penetration medium 4 may be a suspension and/or may comprise one or more, preferably all, of the following components: Al₂O₃, preferably wherein the Al₂O₃ is present as α-Al₂O₃ and/or in powder form, metakaolin, preferably in powder form, silicic acid, deflocculant, and/or water.

Thus, according to a particularly preferred embodiment, the ceramic penetration medium 4 is a suspension comprising the following components: α-Al₂O₃ in powder form, metakaolin in powder form, silicic acid, deflocculant, and water.

The silicic acid is preferably present in the form of a colloidal aqueous dispersion. The percentage by weight of the colloidal aqueous dispersion of silicic acid is preferably between 2.5 % and 20 %, in particular between 5 % and 15 %.

The D₅₀ value of the Al₂O₃ or α-Al₂O₃ and/or the metakaolin is preferably 2 µm or less.

The percentage by weight of the Al₂O₃ or α-Al₂O₃ in the suspension is preferably between 30 % and 70 %, in particular between 40 % and 60 %.

The percentage by weight of metakaolin in the suspension is preferably between 2.5 % and 20 %, in particular between 5 % and 15 %.

The percentage by weight of the deflocculant in the suspension is preferably between 0.25 % and 2.5 %, in particular between 0.5 % and 2 %. The deflocculant is preferably carboxylic acid-based.

The composite material 1 is preferably a green body and/or unsintered.

Preferably, the composite material 1 or green body has a defined green strength. In particular, the green strength may be adjusted or defined, for example by choosing the viscosity and/or penetration depth P1, P3 of the ceramic penetration medium 4 accordingly and/or by drying and/or heating the penetrated textile layers 2, 3 in such a way or to such an extent that the desired green strength results. In other words, it is preferably possible to produce the composite material 1 or green body with a defined or desired green strength.

The textile layers 2, 3 are preferably bonded to each other or held together by the ceramic penetration medium 4. Preferably, the composite material 1 is free of or does not comprise a bonding medium, such as glue or adhesive, for bonding the first and second textile layers 2, 3 to each other in addition to the ceramic penetration medium 4. In other words, the ceramic penetration medium preferably serves as glue or adhesive connecting the layers 2, 3.

In a particularly preferred embodiment, the composite material 1 has the following feature combination:
- the first, completely penetrated textile layer 2 is a veil made of glass fibers, in particular E-glass fibers, and has a thickness D2 of 0.4 mm to 0.5 mm, in particular about 0.45 mm,
- the second, partly penetrated textile layer 3 is a woven fabric made of glass fibers, in particular E-glass fibers, and has a thickness D3 of 0.6 mm to 1.0 mm, in particular about 0.8 mm,
- the composite material 1 has a thickness D1 of at most 1.5 mm,
- the penetration depth P1 of the composite material 1 is between 1.0 mm and 1.2 mm and between 80 % and 95 %,
- the penetration depth P3 of the second textile layer 3 is between 0.5 mm and 0.7 mm and between 70 % and 92 %, and
- the ceramic penetration medium 4 is a water-based dispersion comprising dispersed mullite particles and a deflocculant.

This particularly preferred embodiment of the composite material 1 was tested in a so-called "rocket test" simulating the event of a thermal runaway.

In the tested embodiment of the composite material 1, the first textile layer 2 was an E-glass veil with a thickness of 0.45 determined according to DIN EN ISO 9073-2:1996, which is commercially available from the manufacturer Saint-Gobain Adfors CZ under the name U50R. Further, the second textile layer 3 was a loomstate E-glass woven fabric with a thickness of 0.8 mm determined according to DIN EN ISO 5084:1996-10 and/or DIN EN ISO 2286-3:2017-01 and a mass per unit area of 650 g/m² determined according to DIN EN 12127:1997-12, which is commercially available from the manufacturer Saint-Gobain/HKO under the name TG650/9LHD (loomstate variant).

In the rocket test, a thermal high-speed mass flow is applied to a test piece of the composite material 1. The force F acting on the test piece as a result of the thermal high-speed mass flow applied to the test piece and the temperature T on a side of the test piece facing away from the applied thermal high-speed mass flow are continuously determined.

The thermal high-speed mass flow (or mass flow, for short) transfers heat and a force into the test piece and is in the form of a jet directed at the test object. Particles may be added to the mass flow. The mass flow has a flow velocity that is preferably higher than 50 m/s at its maximum. The temperature of the mass flow is preferably between 1.000 °C and 1.500 °C. The impact cross-section of the mass flow is preferably 1 cm² to 2 cm².

For more details regarding the rocket test, reference is made to DE 10 2022 120 768 A1, which is in particular incorporated by reference. The rocket test is in particular the method described and/or claimed in DE 10 2022 120 768 A1.

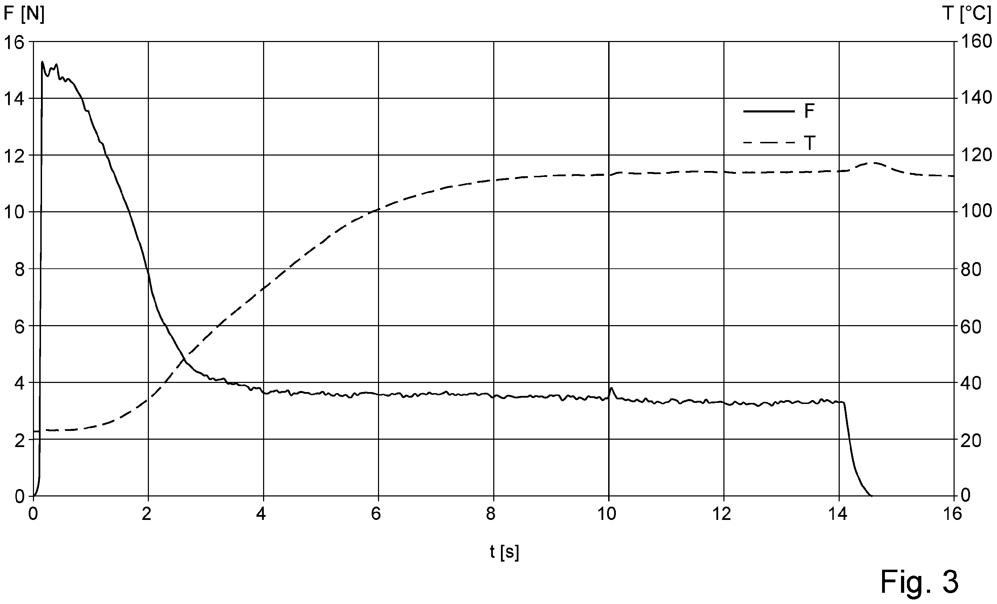

The results of the rocket test are shown in Fig. 3.

Fig. 3 shows the force F applied to the test piece by the mass flow and the temperature T measured on the side of the test piece facing away from the mass flow over the time t.

As seen in Fig. 3, the composite material 1 has a high thermal runaway resistance. In particular, the temperature T on the side of the composite material 1 facing away from the mass flow stays below 120 °C for at least 16 seconds. Further, no hole is formed in the composite material 1 during the rocket test.

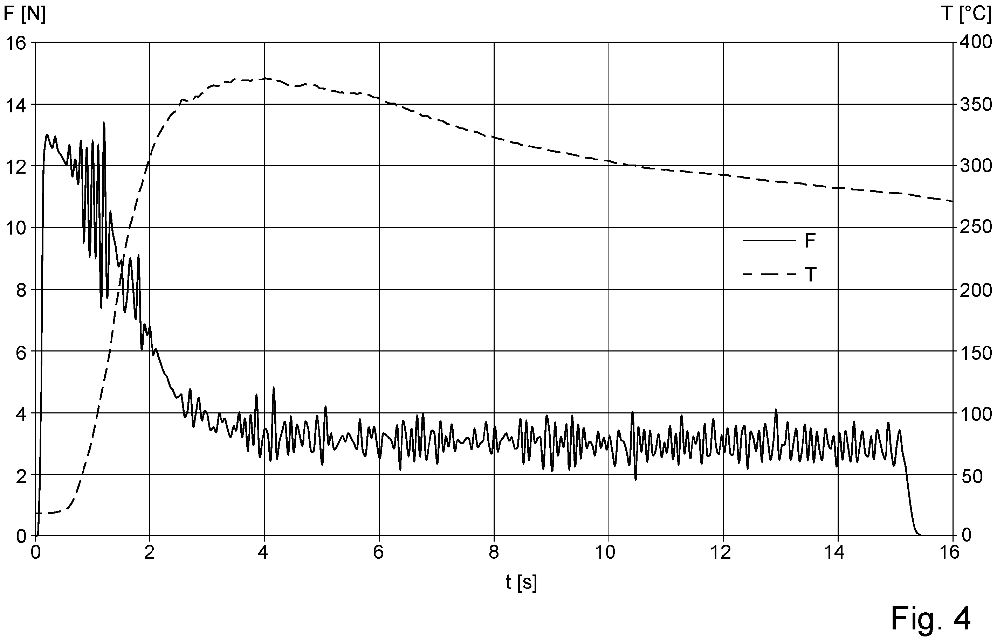

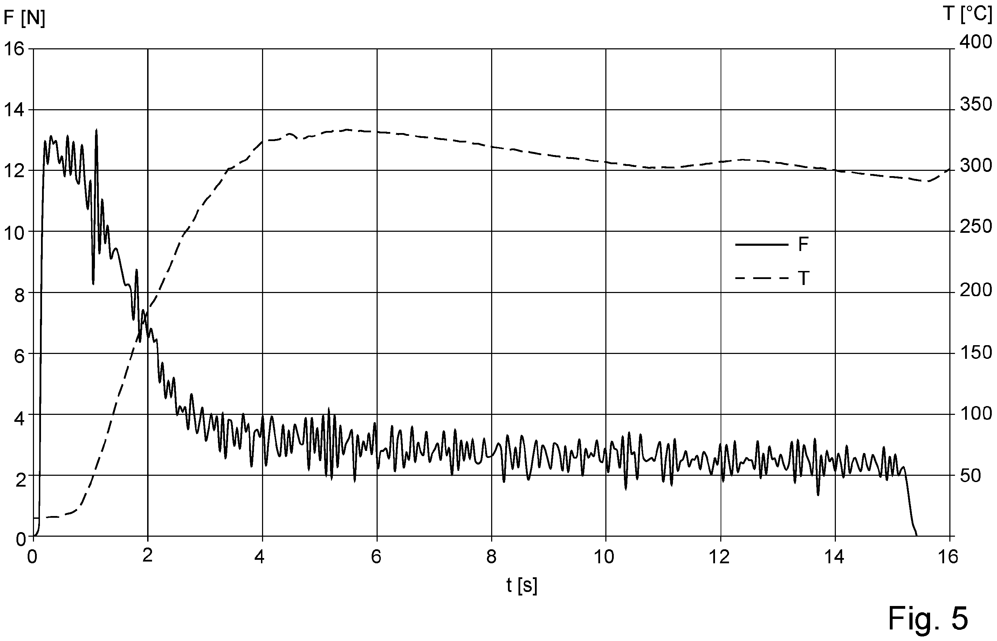

Figs. 4 and 5 show results of the rocket test performed with different comparative materials.

The test results shown in Fig. 4 were obtained with a material consisting of a glass fiber woven fabric covered with scrim-reinforced mica on both sides. Said glass woven fabric is basically the same fabric as the one used as second textile layer 3 in the composite material 1 for the test shown in Fig. 3, but in a variant having a non-combustible, pure inorganic impregnation (named "FH 1000") instead of the loomstate variant used in the tested composite material 1. The FH 1000 variant used has a thickness of 0.71 mm determined according to DIN EN ISO 5084:1996-10 and/or DIN EN ISO 2286-3:2017-01 and a mass per unit area of 675 g/m² determined according to DIN EN 12127:1997-12. The material used for the test shown in Fig. 4 is commercially available from the manufacturer Saint-Gobain/HKO under the name DEFENSOR-Flex^{®} ML-38. The woven fabric layer of DEFENSOR-Flex^{®} ML-38 is commercially available from the manufacturer Saint-Gobain/HKO under the name TG650/9LHD (FH 1000 variant).

The test results shown in Fig. 5 were obtained with a material very similar to the material used for the test shown in Fig. 4, i.e. also with a material consisting of a glass fiber woven fabric covered with scrim-reinforced mica on both sides. The material used for the test shown in Fig. 5 differs from the material used for the test shown in Fig. 4 in the thickness and area weight of the glass fiber woven fabric. Namely, the glass fiber woven fabric has a thickness of 1.25 mm determined according to DIN EN ISO 5084:1996-10 and/or DIN EN ISO 2286-3:2017-01 and a mass per unit area of 1065 g/m² determined according to DIN EN 12127:1997-12. The material used for the test shown in Fig. 5 is commercially available from the manufacturer Saint-Gobain/HKO under the name DEFENSOR-Flex^{®} ML-39. The woven fabric layer of DEFENSOR-Flex^{®} ML-39 is commercially available from the manufacturer Saint-Gobain/HKO under the name TG1000/9L (FH 1000 variant).

In the rocket tests performed with the comparative materials in Fig. 4 and 5, a hole was formed in the test material in each case and the materials were each completely destroyed. From the curves shown in Figs. 4 and 5, it is evident that the temperatures T on the side of the test materials facing away from the mass flow reached more than 300 °C within a few seconds. In other words, both comparative materials failed the rocket test.

In contrast, no hole was formed in the proposed composite material 1 and the temperature T on the side of the test materials facing away from the mass flow stayed below 120 °C. In other words, the composite material 1 impressively passed the rocket test.

In the following, a proposed method for producing a composite material 1, in particular the composite material 1 described above, is described in more detail.

The method comprises providing ceramic penetration medium 4, the first textile layer 2 made from glass fibers and the second textile layer 3 made from glass fibers, wherein one of the textile layers 2, 3 is a nonwoven fabric, in particular a veil, and one of the textile layers 2, 3 is a woven fabric.

Further, the method comprises completely penetrating the first textile layer 2 with the ceramic penetration medium 4 and partly or not completely penetrating the second textile layer 3 with the ceramic penetration medium 4.

The method comprises forming the composite material 1 from the first textile layer 2, the second textile layer 3 and the ceramic penetration medium 4. This in particular includes bringing together the first and second textile layers 2, 3 and in particular bonding the first textile layer 2 to the second textile layer 3, in particular by heating.

Preferably, the method comprises first bringing together the textile layers 2, 3 and then applying the ceramic penetration medium 4 to the textile layers 2, 3, preferably by knife coating. In this case, the ceramic penetration medium 4 is particularly applied to the first textile layer 2 or its surface facing away from the second textile layer 3, so that the ceramic penetration medium 4 is first pressed into and/or diffuses into or penetrates into the first textile layer 2 first and then into the second textile layer 3.

After applying the ceramic penetration medium 4 to the textile layers 2, 3 and bringing the textile layers 2, 3 together, the penetrated textile layers 2, 3 are preferably heated. By the heating, the composite material 1 is preferably formed. In particular, the heating results in at least partial drying of the ceramic penetration medium 4, in particular by at least partial evaporating of water and/or other liquids contained in the ceramic penetration medium 4, and bonding the textile layers 2, 3 together.

In particular, the heating is carried out with such a low temperature that the composite material 1 formed by heating remains unsintered and/or no sintering takes place. The heating may be carried out, for example, for 5 min to 15 min, in particular 8 min to 10 min, and/or at a temperature of preferably 200 °C or less, more preferably 150 °C or less, in particular 130 °C or less. Such low temperatures avoid the boiling away of the water contained in the ceramic penetration medium 4 and/or avoid the formation of bubbles.

However, it is also possible to apply the ceramic penetration medium 4 to the textile layers 2, 3 individually and/or separately, in particular before bringing them together and/or by knife coating.

The viscosity of the ceramic penetration medium 4 and/or the process parameters of applying the ceramic penetration medium 4 to the textile layers 2, 3, for example the amount of applied ceramic penetration medium 4, the speed of the textile layers 2, 3, the distance of a coating knife to the textile layers 2, 3 and/or the pressure by which the ceramic penetration medium 4 is applied, are preferably chosen in such a way that the desired penetration, in particular the complete penetration of the first textile layer 2 and the partial penetration of the second textile layer 3 with the desired penetration depth P3, is achieved.

The method may comprise moistening one of the textile layers 2, 3, in particular the woven fabric, before penetrating said one of the textile layers 2, 3, in particular the woven fabric, with the ceramic penetration medium 4 and/or before bringing the first and second textile layers together. The moistening is preferably performed by applying water to said one of the textile layers 2, 3.

The method may comprise forming a plurality of preferably identical protection elements 7 from the composite material 1. This preferably takes place after heating. The protection elements 7 may be obtained by cutting, die-cutting, and/or punching the composite material 1.

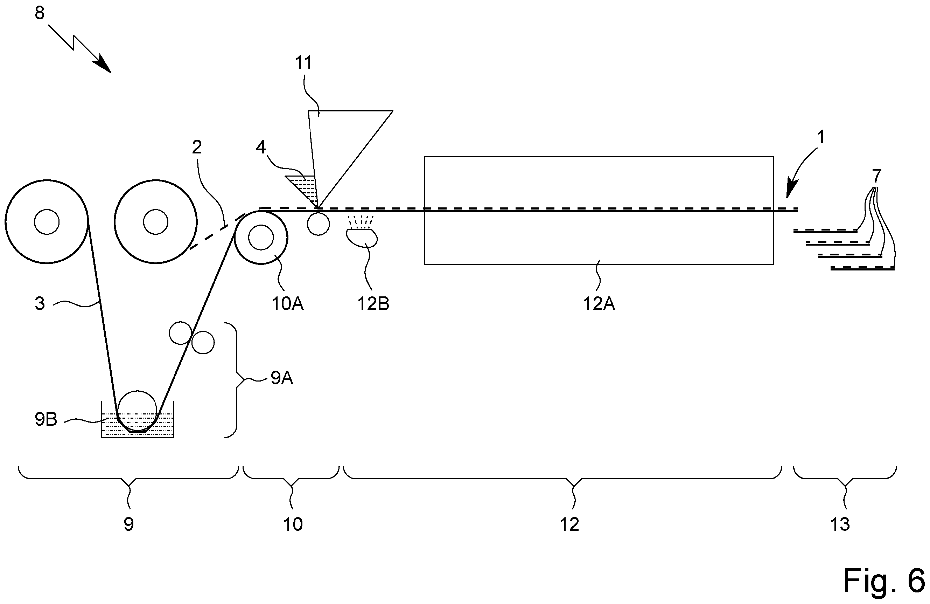

Fig. 6 shows a schematic illustration of an installation 8 by which the method is preferably performed.

The installation 8 is configured for producing the composite material 1 and/or performing the method described herein.

The installation 8 preferably comprises a feed station 9 for providing the first and second textile layers 2, 3. The first and second textile layers 2, 3 are preferably provided as continuous material and/or on rolls.

The feed station 9 may have a moistening device 9A for moistening at least one of the textile layers 2, 3, in particular the second textile layer 3, with a moistening medium 9B before penetrating the textile layer 2, 3 with the ceramic penetration medium 4. The moistening medium 9B is preferably water. The moistening device 9A preferably comprises a foulard and/or is configured to apply the moistening medium 9B with a foulard.

The installation 8 preferably comprises a penetration station 10 for penetrating the textile layers 2, 3 with the ceramic penetration medium 4. In machine direction, the penetration station 10 is preferably arranged behind the feed station 9.

The textile layers 2, 3 are preferably brought together in the penetration station 10. For this, the penetration station 10 preferably comprises a roll 10A on which the layers 2, 3 are brought together.

Preferably, the penetration station 10 comprises a coating knife 11 and/or is configured for applying the ceramic penetration medium 4 to the textile layers 2, 3, in particular the surface of the first textile layer 2 facing away from the second textile layer 3, by knife coating. Alternatively, the penetration station 10 may have a foulard instead of the coating knife 11 for applying the ceramic penetration medium 4.

The penetration station 10 may have different or separate devices for separately and individually applying ceramic penetration medium for to each of the textile layers 2, 3, for example two separate coating knifes 11.

Further, the installation 8 preferably comprises a heating station 12 for heating the textile layers 2, 3 penetrated with the ceramic penetration medium 4. The heating station 12 preferably has a furnace or oven 12A through which the layers 2, 3 penetrated with the ceramic penetration medium 4 may be transported. As an alternative or in addition, the heating station 12 may have an infrared radiation device 12B configured for heating and/or drying the textile layers 2, 3 by infrared radiation. For example, the textile layers 2, 3 penetrated with the ceramic penetration medium 4 may be pre-dried by irradiating the textile layers 2, 3 penetrated with the ceramic penetration medium 4 with infrared radiation by the infrared radiation device 12B and may be subsequently dried further in the furnace or oven 12A.

Preferably, the installation 8 comprises a finishing station 13, in particular arranged in machine direction behind the heating station 12. The finishing station 13 is preferably configured for cutting the composite material 1 into sheets and/or for obtaining the protection elements 7 from the composite material 1.

The textile layers 2, 3 are preferably continuously fed through the installation 8 and/or from the feed station 9 to the penetration station 10, from the penetration station 10 to the heating station 12 and/or from the heating station 12 to the finishing station 13.

According to an independently realizable aspect, the present invention relates to a protection element 7 made of the composite material 1 as described herein, the protection element 7 being configured for thermal and/or electrical insulation of a battery 5 a rechargeable battery 5 and/or for preventing damage in case of a thermal runaway of a rechargeable battery 5, preferably a traction battery of an electric vehicle 6.

According to a further, independently realizable aspect, the present invention relates to a battery 5 having a composite material 1 as described herein or a protection element 7 being made from the composite material 1.

According to a further, independently realizable aspect, the present invention relates to a use of a composite material 1, which is configured as described herein, for thermal and/or electrical insulation of a rechargeable battery 5 and/or for preventing damage in case of a thermal runaway of a rechargeable battery 5, preferably a traction battery of an electric vehicle 6.

Individual aspects of the present invention can be combined as desired, but also realized independently of each other.

### List of Reference Signs:

- 1: Composite material
- 2: First textile layer
- 3: Second textile layer
- 3A: First region of 3
- 3B: Second region of 3
- 4: Ceramic penetration medium
- 5: Battery
- 5A: Cell of 5
- 5B: Housing of 5
- 5C: Cover of 5
- 5D: Vent
- 6: Electric vehicle
- 7: Protection element
- 8: Installation
- 9: Feed station
- 9A: Moistening device
- 9B: Moistening medium
- 10: Penetration station
- 10A: Roll
- 11: Coating knife
- 12: Heating station
- 12A: Furnace/oven
- 13: Finishing station

- D1: Thickness of 1
- D2: Thickness of 2
- D3: Thickness of 3
- F: Force
- P1: Penetration depth of 1
- P3: Penetration depth of 3
- T: Temperature
- t: time

## Claims

1. Composite material (1), in particular for thermal insulation of a rechargeable battery (5) and/or for preventing damage in case of a thermal runaway of a rechargeable battery (5), preferably a traction battery of an electric vehicle (6),
the composite material (1) having a first textile layer (2), a second textile layer (3) and a ceramic penetration medium (4),
wherein the first textile layer (2) is made from glass fibers and the second textile layer (3) is made from glass fibers, and
wherein one of the textile layers (2, 3) is a nonwoven fabric, in particular a veil, and one of the textile layers (2, 3) is a woven fabric,
**characterized in that**
the first textile layer (2) is completely penetrated with the ceramic penetration medium (4) and the second textile layer (3) is partly penetrated with the ceramic penetration medium (4).

2. Composite material according to claim 1, **characterized in that** the first textile layer (2) is the nonwoven fabric, in particular the veil, and the second textile layer (3) is the woven fabric.

3. Composite material according to claim 1 or 2, **characterized in that** the penetration depth (P3) of the ceramic penetration medium (4) in the second textile layer (3) is between 0.3 mm and 1.0 mm, preferably between 0.5 mm and 0.7 mm, and/or
that the penetration depth (P3) of the ceramic penetration medium (4) in the second textile layer (3) is between 35 % and 92 %, preferably between 70 % and 85 %, of the thickness (D3) of the second textile layer (3).

4. Composite material according to one of the preceding claims, **characterized in that** the penetration depth (P1) of the ceramic penetration medium (4) in the composite material (1) is between 60 % and 95 %, preferably between 80 % and 90 %, of the thickness (D1) of the composite material (1), and/or
that the penetration depth (P1) of the ceramic penetration medium (4) in the composite material (1) is between 0.7 mm and 1.2 mm, preferably between 1.0 mm and 1.1 mm.

5. Composite material according to one of the preceding claims, **characterized in that** the first textile layer (2) has a thickness (D2) between 0.3 mm and 0.6 mm, preferably between 0.4 mm and 0.5 mm, in particular about 0.45 mm.

6. Composite material according to one of the preceding claims, **characterized in that** the second textile layer (3) has a thickness (D3) between 0.2 mm and 2.0 mm, preferably between 0.4 mm and 1.5 mm, more preferably between 0.6 mm and 1.0 mm, in particular about 0.8 mm.

7. Composite material according to one of the preceding claims, **characterized in that** the composite material (1) has a thickness (D1) of 2 mm or less, preferably 1.8 mm or less, in particular 1.5 mm or less, particularly preferably 1.3 mm or less.

8. Composite material according to one of the preceding claims, **characterized in that** the first textile layer (2) is made of glass fibers selected from E-glass fibers, ECR-glass fibers, S-glass fibers and/or silica fibers.

9. Composite material according to one of the preceding claims, **characterized in that** the second textile layer (3) is made of glass fibers selected from E-glass fibers, ECR-glass fibers, S-glass fibers and/or silica fibers.

10. Composite material according to one of the preceding claims, **characterized in that**
the ceramic penetration medium (4) comprises particles of mixed metal oxide, the mixed metal oxide consisting of aluminum oxide (Al₂O₃) and silicon dioxide (SiO₂), preferably mullite, in particular synthetic mullite, and/or
the ceramic penetration medium (4) is a suspension and/or comprises one or more, in particular all, of the following components: Al₂O₃, preferably α-Al₂O₃ and/or in powder form, metakaolin, preferably in powder form, silicic acid, deflocculant, and/or water.

11. Composite material according to one of the preceding claims, **characterized in that** the ceramic penetration medium (4) comprises particles of sinterable material and/or oxide ceramic material and/or **in that** the ceramic penetration medium (4) is a dispersion with particles dispersed in a dispersion medium.

12. Composite material according to one of the preceding claims, **characterized in that** the ceramic penetration medium (4) is water-based or comprises water, in particular deionized water, and/or comprises a deflocculant.

13. Composite material according to one of the preceding claims, **characterized in that** the composite material (1) is a green body and/or is unsintered.

14. Composite material according to one of the preceding claims, **characterized in that** the first and second textile layers (2, 3) are bonded to each other by the ceramic penetration medium (4) and/or **in that** the composite material (1) does not comprise a bonding medium for bonding the first and second textile layers (2, 3) to each other in addition to the ceramic penetration medium (4).

15. Method for producing a composite material (1) having a first textile layer (2), a second textile layer (3) and a ceramic penetration medium (4), the composite material (1) in particular being configured for thermal insulation of a rechargeable battery (5) and/or for preventing damage in case of a thermal runaway of a rechargeable battery (5), preferably a traction battery of an electric vehicle (6),
the method comprising:
providing a first textile layer (2) made from glass fibers and a second textile layer (3) made from glass fibers, wherein one of the textile layers (2, 3) is a nonwoven fabric, in particular a veil, and one of the textile layers (2, 3) is a woven fabric,
providing a ceramic penetration medium (4), and
forming the composite material (1) from the first textile layer (2), the second textile layer (3) and the ceramic penetration medium (4),
**characterized in that**
the method comprises completely penetrating the first textile layer (2) with the ceramic penetration medium (4) and partly penetrating the second textile layer (3) with the ceramic penetration medium (4), and/or
a composite material (1) according to one of the preceding claims is formed.
